# EUROPÄISCHE PATENTANMELDUNG

(11) **EP 1 968 148 A1**
(43) Veröffentlichungstag der Anmeldung: **10.09.2008**
(21) Anmeldenummer: 07003570.4
(22) Anmeldetag: 21.02.2007
(51) Int. Cl.: H01M 8/24

(54) **Brennstoffzellenanordnung**

(71) Anmelder: SIEMENS AKTIENGESELLSCHAFT, 80333 München (DE)
(72) Erfinder: Mehltretter, Igor, 91054 Buckendorf (DE)

(57) **Zusammenfassung**

Die Erfindung betrifft eine Brennstoffzellenanordnung (66, 76) mit einer Anzahl von Brennstoffzellen (8), die zu mehreren, in einem Betriebsgasstrom kaskadiert angeordneten Kaskadenstufen (S₁, S₂, S₃, S₄, S₅,) zusammengefasst sind.

Es wird vorgeschlagen, dass eine Kaskadenstufe (S₂, S₃, S₄, S₅,) räumlich zwischen zwei im Betriebsgasstrom vorhergehenden Kaskadenstufen (S₁, S₂, S₃, S₄) angeordnet ist. Es kann eine kompakte Brennstoffzellenanordnung (66, 76) erreicht werden, bei der Gaszufuhrkanäle (72) in ihrer räumlichen Fortsetzung für weitere Gaszufuhrkanäle (74) verwendbar sind.

## Beschreibung

Die Erfindung betrifft eine Brennstoffzellenanordnung mit einer Anzahl von Brennstoffzellen, die zu mehreren in einem Betriebsgasstrom kaskadiert angeordneten Kaskadenstufen zusammengefasst sind.

In einer Brennstoffzelle reagieren Wasserstoff (H₂) und Sauerstoff (O₂) an einem Elektrolyten unter Abgabe von Wärme zu elektrischer Energie und Produktwasser, das - zusammen mit auskondensiertem Befeuchtungswasser - aus der Brennstoffzelle ausgetragen werden muss. Damit eine Brennstoffzelle störungsfrei und effizient funktionieren kann, muss der Brennstoffzelle in ausreichender Menge Betriebsgas, also sauerstoff- oder wasserstoffhaltiges Gas zugeführt werden, um das entstandene Wasser einwandfrei abführen zu können. Dies geschieht durch Ausblasen des Wassers aus der Brennstoffzelle, weshalb ihr mehr Betriebsgas zugeführt wird, als sie für die Reaktion benötigt, damit überschüssiges Betriebsgas zum Ausblasen zur Verfügung steht. Dies führt dazu, dass ein Teil des zugeführten Betriebsgases ohne eine Reaktion einzugehen die Brennstoffzelle wieder verlässt.

Zur Nutzung des aus der Brennstoffzelle ausgeblasenen Betriebsgases hat sich eine sogenannte Kaskadierung gut bewährt, bei der das jeweilige Betriebsgas nacheinander mehrere Kaskadenstufen durchströmt, die eine abnehmende Zahl von parallelgeschalteten Gasräumen von Brennstoffzellen aufweisen. Durch die Kaskadierung wird ungenutztes Betriebsgas aus der ersten Kaskadenstufe in die zweite Kaskadenstufe gespeist, dort weitergehend verbraucht, die Reste werden in die dritte, noch weniger Brennstoffzellen enthaltende Kaskadenstufe gespeist und so fort. Hierdurch kann eine gute Ausnutzung der eingesetzten Betriebsgase erreicht werden. Eine solche Kaskadierung ist beispielsweise aus der WO 02/37594 A2 bekannt.

In der letzten Kaskadenstufe, die üblicherweise aus einer oder mehreren sogenannten Spülzellen besteht, sammelt sich Wasser und die Konzentration von in der elektrochemischen Reaktion nicht verbrauchbaren Inertgasen ist am höchsten. Steigt die Inertgaskonzentration oder die Menge von Wasser in den Spülzellen über einen vorgegebenen Wert, so werden die Spülzellen durch ein gesteuertes Ventil von Inertgas und Wasser entleert und frisches Betriebsgas kann nachströmen.

Ein Signal zum Entleeren einer Spülzelle wird üblicherweise dann gegeben, wenn die Zellspannung der Brennstoffzelle, die als Spülzelle dient, unter einen bestimmten Schwellenwert fällt. Ein Absinken der Zellspannung wird dadurch hervorgerufen, dass zumindest eine der Elektroden nicht mehr ausreichend mit dem entsprechenden Betriebsgas versorgt wird, beispielsweise weil die Spülzelle viel Wasser enthält, das den Zugang des Betriebsgases zur Elektrode blockiert. Sinkt die Zellspannung einer Spülzelle ab, so ist allerdings schwer festzustellen, ob die Anodenseite oder die Kathodenseite entwässert bzw. von Inertgas befreit werden muss. Das Spülen beider Seiten würde zu unnötigem Betriebsgasverlust durch die freie Gasseite führen.

Zur Lösung dieses Problems ist es bekannt, die Kaskadierung der Anodenseite gegenläufig zur Kaskadierung der Kathodenseite einzurichten, so dass sich die anodenseitigen Spülzellen, also diejenigen Brennstoffzellen, deren Anodengasraum als Auffangraum für Wasser und Inertgas verwendet wird, nicht mit kathodenseitigen Spülzellen zusammenfallen. Bei einer Spülzelle wird daher nur einer ihrer beiden Gasräume als Spülgasraum verwendet, der konsequenterweise bei einem Abfall der Zellspannung gespült wird.

Durch die gegenläufige Kaskadierung und die Notwendigkeit, in einem Brennstoffzellenstapel hochkant stehende große Brennstoffzellen von oben nach unten mit Betriebsgas zu durchströmen, damit das Produktwasser nach unten ausgeblasen werden kann, ist eine aufwändige Kanalführung zu den Kaskadenstufen notwendig, die neben einem kostenmäßigen Aufwand auch zu einer großvolumigen Brennstoffzellenanordnung führt.

Es ist die Aufgabe der vorliegenden Erfindung, eine Brennstoffzellenanordnung anzugeben, die kompakt gebaut werden kann.

Diese Aufgabe wird durch eine Brennstoffzellenanordnung der eingangs genannten Art gelöst, bei der erfindungsgemäß eine Kaskadenstufe räumlich zwischen zwei im Betriebsgasstrom vorhergehenden Kaskadenstufen angeordnet ist. Durch diese Anordnung der Kaskadenstufen kann ein um die Brennstoffzellen angeordneter Raum effektiv für eine Verrohrung bzw. eine Anordnung von Betriebsgaskanälen benutzt werden.

Die Kaskadenstufen können direkt hintereinander angeordnet sein. In einer Kaskadenstufe wird eine Mehrzahl von Brennstoffzellen parallel von einem Betriebsgas durchströmt. Hierbei werden sowohl das sauerstoffhaltige als auch das wasserstoffhaltige Gas als Betriebsgas bezeichnet.

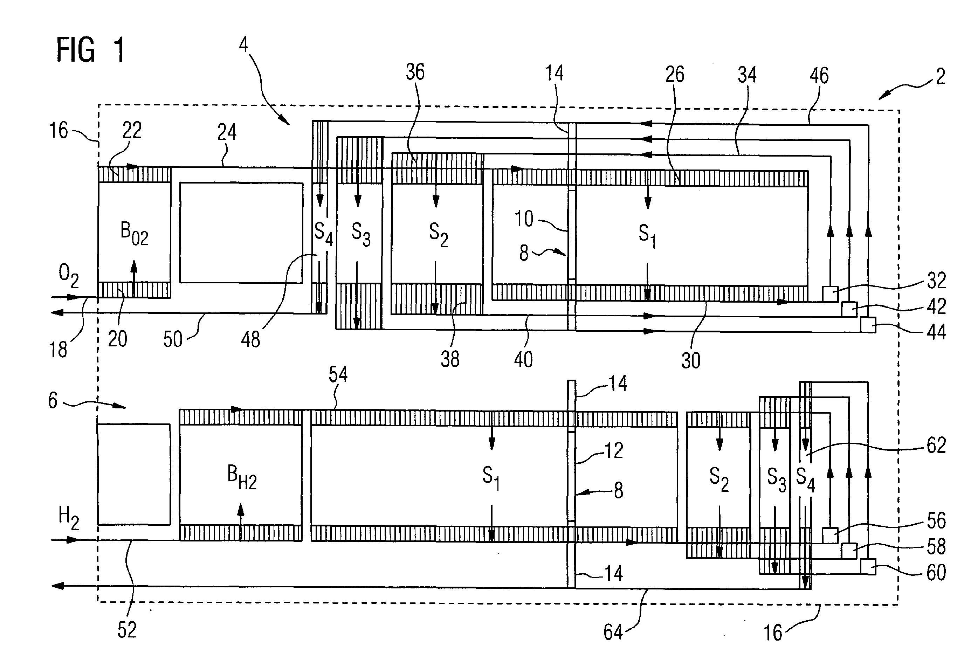

Die Erfindung geht hierbei von der Überlegung aus, dass sich eine räumliche Anordnung in der Form, dass sich die zweite Kaskadenstufe an die erste Kaskadenstufe anschließt, daran die dritte, daran die vierte usw., für einen zuverlässigen Betrieb bewährt hat. Diese räumliche Anordnung der Kaskadenstufen führt allerdings dazu, dass an der letzten Kaskadenstufe eine Vielzahl von Rohren bzw. Kanälen vorbeiführen, so dass dort ein hoher Platzbedarf notwendig ist. Eine Kanalführung mit einer solchen bekannten räumlichen Anordnung der Kaskadenstufen ist in Fig. 1 dargestellt und weiter unten beschrieben.

Durch das räumliche Umordnen der Kaskadenstufen derart, dass die Reihenfolge der räumlichen Aneinanderreihung nicht der Durchströmungsreihenfolge der Kaskadenstufe entspricht, kann die Kanalführung entlang der Brennstoffzellenanordnung günstiger verteilt werden, und es kann insgesamt Raum eingespart werden.

Die Erfindung ist besonders vorteilhaft anwendbar bei einem Brennstoffzellenblock, bei dem die Brennstoffzellen in einem durchgehenden Block angeordnet sind. Hierbei sind flache, vorzugsweise rechteckige Brennstoffzellenträger aufeinander gestapelt, die in ihrem Inneren die Brennstoffzelle tragen und in ihren äußeren Bereichen Öffnungen aufweisen, die in zusammengefügter Form der flachen Träger Axialkanäle bilden, die in Längsrichtung des Brennstoffzellenblocks verlaufen. Je mehr Kanäle notwendig sind, desto mehr Öffnungen muss ein jeder Träger aufweisen und umso größer wird der Träger und umso größer der Brennstoffzellenblock. Durch eine effektive Nutzung aller Axialkanäle in möglichst vielen Kanalbereichen kann die Kanalführung kompakt und der Brennstoffzellenblock kleinbauend ausgeführt werden.

In einer weiteren vorteilhaften Ausgestaltung der Erfindung ist die im Betriebsgasstrom letzte Kaskadenstufe räumlich zwischen zwei im Betriebsgasstrom vorhergehenden Kaskadenstufen angeordnet. Hierdurch kann eine besonders platzsparende Kanalführung erreicht werden.

Vorteilhafterweise ist die letzte Kaskadenstufe eine Spülzellenstufe. Diese umfasst eine oder mehrere Spülzellen, die das Ende einer Kaskadierung bilden und denen somit keine weitere Kaskadenstufe nachgeschaltet ist. Durch die Anordnung der Spülzellenstufe räumlich zwischen zwei vorhergehenden Stufen können ungünstige Querströme in den Spülzellen weitgehend vermieden werden.

Sehr kurze Gastransportwege und damit eine effektive Nutzung von Betriebsgaskanälen kann erreicht werden, wenn die Kaskadenstufen in der Reihenfolge S₁, Sₙ, S₂, ..., Sₙ₋₁ räumlich hintereinander angeordnet sind, wobei S₁ die erste und Sₙ die letzte Kaskadenstufe ist.

Vorteilhafterweise sind die Brennstoffzellen für beide Betriebsgase jeweils zu einer Gasseite mit jeweils mehreren kaskadiert angeordneten Kaskadenstufen zusammengefasst. Beide Gasseiten, also sowohl die Sauerstoffseite als auch die Wasserstoffseite bzw. sowohl die Kathodenseite als auch die Anodenseite der Brennstoffzellenanordnung können durch die Kaskadierung effizient betrieben werden.

Hierbei ist zweckmäßigerweise eine Spülzellenstufe einer Gasseite, beispielsweise der Sauerstoffseite, in anderen Brennstoffzellen angeordnet als die Spülzellenstufe der anderen Gasseite, in dem Beispiel der Wasserstoffseite. Die Spülzellenstufen sind also gegenseitig überschneidungsfrei angeordnet. Da sich durch diese Anordnung die Spülzellen der Anodenseite und der Kathodenseite gegenseitig wenig beeinflussen, kann stets erkannt werden, welcher Gasraum einer Spülzelle bei einem Spannungsabfall der Spülzelle gespült werden muss.

Ein Einfluss eines Nicht-Spülgasraums einer Spülzelle auf den Spülgasraum der Spülzelle kann im regulären Betrieb sehr sicher ausgeschlossen werden, wenn eine Spülzellenstufe einer Gasseite in Brennstoffzellen der ersten oder zweiten Kaskadenstufe der anderen Gasseite angeordnet ist. In der ersten oder zweiten Kaskadenstufe ist das Verhältnis von Betriebsgas zu störenden Bestandteilen, wie Wasser und Inertgas, so gering, dass ein Nicht-Spülgasraum der ersten oder zweiten Kaskadenstufe während eines normalen Betriebs keinen Spannungsabfall in der Brennstoffzelle erzeugt. Bei einem Spannungsabfall der als Spülzelle ausgeführten Brennstoffzelle kann somit sehr sicher geschlossen werden, dass der Spülgasraum gespült werden muss.

Eine Verrohrung mit kurzen Wegen bzw. kurze Betriebsgaskanälen kann erreicht werden, wenn jeweils die erste Kaskadenstufe beider Gasseiten räumlich am Anfang aller Kaskadenstufen angeordnet ist. Zusätzlich kann sowohl ein Druckverlust in den Kanälen und als auch eine Abkühlung des Gasstroms in den Kanälen gering gehalten werden, wodurch einer Unterbefeuchtung entgegengewirkt werden kann und somit eine Störungsrate des Betriebsablaufs bzw. eine ungewünschte Alterung der Brennstoffzellen gering gehalten werden kann.

Ein Druckverlust in der Betriebsgaszuführung zur ersten Kaskadenstufe kann besonders gering gehalten werden, wenn die im Betriebsgasstrom erste Kaskadenstufe beider Gasseiten mehrere parallel angeordnete Gaszufuhrkanäle aufweist. Deren räumliche Fortsetzung in Längsrichtung dient zweckmäßigerweise als Gaszufuhrkanäle für weitere Kaskadenstufen. Durch die Versorgung der ersten Kaskadenstufen aus mehreren Gaszufuhrkanälen kann eine Strömungsgeschwindigkeit in den Kanälen gering und hierdurch ein Druckverlust erzeugender Strömungswiderstand ebenfalls gering gehalten werden. Durch die Nutzung der räumlichen Fortsetzungen der Gaszufuhrkanäle für die Gaszuführung weiterer Kaskadenstufen kann die Brennstoffzellenanordnung trotzdem kompakt bleiben.

Kurze Gaswege und eine sichere Erkennung der Flutung von Spülgasräumen können erreicht werden, wenn die Kaskadenstufe beider Gasseite in der Reihenfolge S₁, Sₙ, S₂, ..., Sₙ₋₁ räumlich angeordnet sind, wobei S₁ jeweils die erste und Sₙ jeweils die letzte Kaskadenstufe ist.

Die Erfindung wird anhand von Ausführungsbeispielen näher erläutert, die in den Zeichnungen dargestellt sind.

Es zeigen:
- FIG 1: eine aus dem Stand der Technik bekannte Brennstoffzellenanordnung, bei der die Wasserstoffseite und die Sauerstoffseite gegenläufig kaskadiert sind,
- FIG 2: eine erfindungsgemäße Anordnung von Kaskadenstufen, bei der die Spülzellenstufen jeweils zwischen zwei vorhergehenden Stufen angeordnet sind, und
- FIG 3: eine Brennstoffzellenanordnung mit beidseitig fünf Kaskadenstufen, bei denen die letzte Kaskadenstufe jeweils neben der ersten angeordnet ist.

FIG 1 zeigt eine aus dem Stand der Technik bekannte Brennstoffzellenanordnung 2. Der Verdeutlichung halber getrennt und übereinander dargestellt sind die Sauerstoffseite 4 und die Wasserstoffseite 6 der Brennstoffzellenanordnung 2, die in der realen, aufgebauten Brennstoffzellenanordnung 2 ineinander greifend ausgeführt sind.

Die Brennstoffzellenanordnung 2 umfasst eine Vielzahl von Brennstoffzellen 8, von denen in FIG 1 nur eine einzige schematisch dargestellt ist. Jede der Brennstoffzellen 8 umfasst einen Kathodengasraum 10 und einen Anodengasraum 12, wobei der Kathodengasraum 10 auf der Sauerstoffseite 4 und der Anodengasraum 12 auf der Wasserstoffseite 6 angeordnet ist. In der Brennstoffzellenanordnung 2 sind der Kathodengasraum 10 und der Anodengasraum 12 der Brennstoffzelle 8 unmittelbar nebeneinander angeordnet und parallel zueinander ausgerichtet, nur getrennt durch eine Membran-Elektrolyt-Einheit, an der die elektrochemische Reaktion von Wasserstoff und Sauerstoff zu elektrischer Energie, Wärme und Wasser stattfindet. In FIG 1 sind die beiden Gasräume 10, 12 lediglich der Übersicht halber getrennt voneinander dargestellt.

Die Brennstoffzellen 8 der Brennstoffzellenanordnung 2 sind flache, aufeinander gestapelte Brennstoffzellen 8 rechteckigen Querschnitts, die jeweils in einem Träger 14 gehaltert sind, die in ihrer Gesamtheit einen länglichen Brennstoffzellenblock 16 bilden. Sowohl auf der Sauerstoffseite 4 als auch auf der Wasserstoffseite 6 sind die Brennstoffzellen 8 jeweils in vier Kaskadenstufen S₁ - S₄ aufgeteilt, wobei jede Brennstoffzelle 8 zwei Kaskadenstufen S₁ - S₄ angehört, nämlich anodenseitig einer der Kaskadenstufen S₁ - S₄ der Wasserstoffseite 6 und kathodenseitig einer der Kaskadenstufen S₁ - S₄ der Sauerstoffseite 4.

Die Einteilung der Brennstoffzellen 8 bzw. ihrer Kathodengasräume 10 und Anodengasräume 12 in die vier Kaskadenstufen S₁ - S₄ ist auf der Sauerstoffseite 4 anders als auf der Wasserstoffseite 6. Brennstoffzellen 8, deren Kathodengasraum 10 beispielsweise der vierten Kaskadenstufe S₄ der Sauerstoffseite 4 zugeordnet sind, sind hinsichtlich ihrer Anodengasräume 12 der ersten Kaskadenstufe S₁ der Wasserstoffseite 6 zugeordnet.

Während des Betriebs der Brennstoffzellenanordnung wird ein sauerstoffhaltiges Betriebsgas, beispielsweise reiner Sauerstoff, über eine Zuleitung 18 der Sauerstoffseite 4 zugeleitet. Die Zuleitung 14 verläuft in Axialrichtung des Brennstoffzellenblocks 16 und ist als sogenannter Axialkanal ausgeführt. Von diesem Axialkanal führen eine Anzahl von in FIG 1 schematisch dargestellten Radialkanälen 20 zu einem Befeuchter B_{O2}, der in seiner Geometrie analog aufgebaut ist wie eine der Kaskadenstufen S₁ - S₄. Das Betriebsgas durchströmt eine Anzahl von Befeuchtungszellen des Befeuchters B_{O2} und verlässt den Befeuchter B_{O2} durch eine Anzahl weiterer Radialkanäle 22 in befeuchtetem Zustand wieder.

Über einen weiteren Axialkanal 24 gelangt das befeuchtete, sauerstoffhaltige Betriebsgas zur ersten Kaskadenstufe S₁ der Sauerstoffseite 4. Wiederum über Radialkanäle 26 strömt das Betriebsgas in die Kathodengasräume 10 der Brennstoffzellen 8 der ersten Kaskadenstufe S₁ und reagiert dort teilweise an den Membran-Elektrolyt-Einheiten der Brennstoffzellen 8. Das hierbei entstehende Produktwasser wird aus den Kathodengasräumen 10 durch den Anteil des Betriebsgases, der dort keine Reaktion eingegangen ist, durch weitere Radialkanäle 28 nach unten ausgeblasen in einen Axialkanal 30 hinein.

Das Betriebsgas wird anschließend in einen Wasserabscheider 32 eingeblasen, trennt sich dort von dem Produktwasser und wird wieder nach oben zu einem weiteren Axialkanal 34 und Radialkanäle 36 zu den Brennstoffzellen 8 der zweiten Kaskadenstufe S₂ transportiert. Dort reagiert wiederum ein Teil des Betriebsgases in der elektrochemischen Reaktion der Brennstoffzellen 8, wohingegen der wiederum nicht verbrauchte Anteil des Betriebsgases über Radialkanäle 38 und einen Axialkanal 40 zu einem Wasserabscheider 42 geblasen wird. Dort wird wiederum das Produktwasser vom Betriebsgas abgetrennt, das analog wie oben beschrieben der dritten Kaskadenstufe S₃ zugeführt wird, dort erneut teilweise reagiert, wobei der verbleibende Betriebsgasrest über den dritten Wasserabscheider 44 und einen Axialkanal 46 zur vierten Kaskadenstufe S₄ geblasen wird.

Die vierte Kaskadenstufe S₄ umfasst Spülzellen 48, in deren Kathodengasräumen 10 sich die Inertgasanteile des Betriebsgases und das aus der elektrochemischen Reaktion in den Spülzellen 48 gebildete Produktwasser ansammeln. Hierdurch werden die Spülzellen 48 langsam mit Inertgas und Produktwasser geflutet, was die elektrochemische Reaktion in den Spülzellen 48 beeinträchtigt, so dass deren Zellspannung absinkt. Unterschreitet der Zellspannungswert einzelner Spülzellen 48 oder der Spannungswert der vierten Kaskadenstufe S₄ insgesamt einen bestimmten Schwellwert, so werden die Spülzellen 48 - genauer: deren Kathodengasräume 10 - durch das Öffnen eines entsprechendes Ventils gespült, wobei reaktionsfähiges Betriebsgas die Kathodengasräume 10 der Spülzellen 48 durchströmt und das Wasser und das Inertgasanteile über eine Ableitung 50 austrägt.

Die wasserstoffseitige Betriebsgasführung ist analog aufgebaut. Durch eine Zuleitung 52 strömt wasserstoffhaltiges Betriebsgas, insbesondere reiner Wasserstoff, in einen Befeuchter B_{H2}, wird dort mit Wasser befeuchtet und strömt über einen Axialkanal 54 in die erste Kaskadenstufe S₁. Von dort bläst das Betriebsgas - analog wie oben beschrieben - in die zweite, dritte und vierte Kaskadenstufe S₂, S₃, S₄, wobei auskondensiertes Befeuchtungswasser jeweils in Wasserabscheidern 56, 58, 60 vom Betriebsgas abgetrennt wird. Die Brennstoffzellen der vierten Kaskadenstufe S₄ sind als Spülzellen 62 ausgebildet, deren Inertgas und Wasser über eine Ableitung 64 ausgetragen wird.

Die Kaskadierung der Sauerstoffseite 4 und der Wasserstoffseite 6 ist gegenläufig ausgeführt, wodurch die Spülzellen 48 Brennstoffzellen 8 der ersten Kaskadenstufe S₁ der Wasserstoffseite 6 sind. Analog hierzu sind Spülzellen 62 der Wasserstoffseite Brennstoffzellen 8 der ersten Kaskadenstufe S₁ der Sauerstoffseite 4. Ein Zellspannungsabfall in den Spülzellen 48, 62 kann - durch den in aller Regel ungestörten Betriebsablauf in den ersten Kaskadenstufen S₁ - einem Fluten der Spülzellen 48, 62 zugeordnet werden.

Wie aus FIG 1 ersichtlich ist, bedarf es für die Gaszu- und -abführung zu den vier Kaskadenstufen S₁ - S₄ für beide Gasseiten jeweils sieben Axialkanäle 24, 30, 34, 40, 46, 54, so dass im Brennstoffzellenblock 16 allein 14 dieser Kanäle zur Gasführung benötigt werden. Die Träger 14 der Brennstoffzellen 8 weisen also allein für diese Kanäle jeweils 14 Öffnungen auf. Hierdurch muss die Fläche der Träger 14 um die Brennstoffzellen 8 relativ groß ausgeführt sein, um alle 14 Öffnungen - und weitere Öffnungen für weitere Versorgungskanäle - beherbergen zu können.

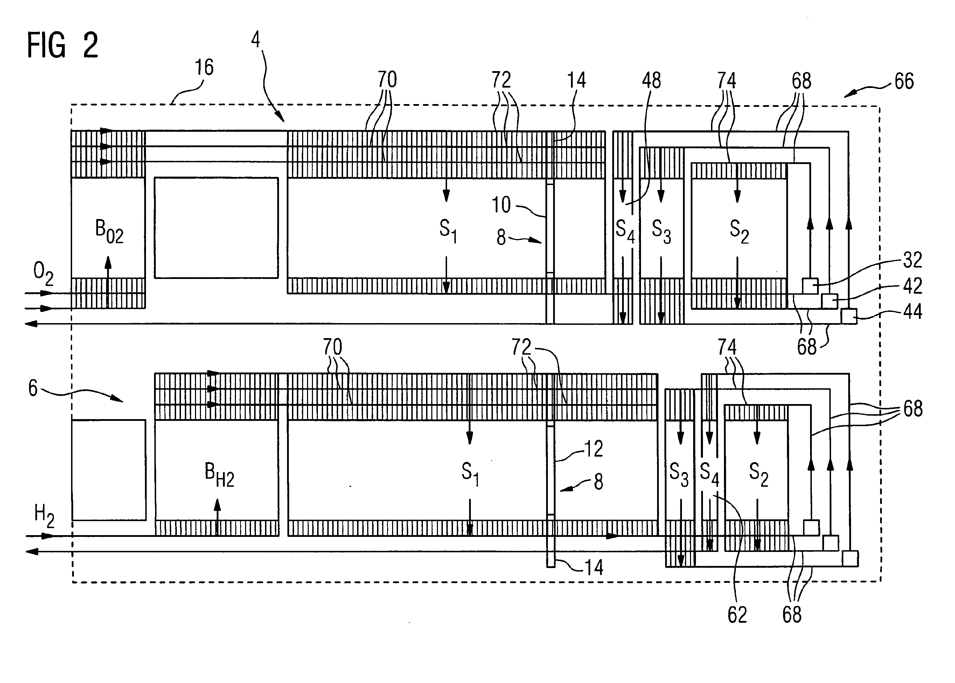

Eine hinsichtlich der Gasführung vorteilhaftere Anordnung der Kaskadenstufen S₁ - S₄ ist in FIG 2 dargestellt. FIG 2 zeigt als ein Ausführungsbeispiel der Erfindung eine Brennstoffzellenanordnung 66. In die nachfolgende Beschreibung ist die Beschreibung der Brennstoffzellenanordnung 2 explizit miteinbezogen, so dass sie sich im Wesentlichen auf die Unterschiede zur Brennstoffzellenanordnung 2 aus FIG 1 beschränkt, auf die bezüglich gleich bleibender Merkmale und Funktionen verwiesen wird. Im Wesentlichen gleichbleibende Bauteile sind grundsätzlich mit den gleichen Bezugszeichen beziffert.

Auf der Sauerstoffseite 4 ist die vierte Kaskadenstufe S₄, die eine Spülzellenstufe ist, zwischen der ersten und der dritten Kaskadenstufe S₁, S₃ angeordnet. Auf der Wasserstoffseite 6 ist die vierte Kaskadenstufe S₄ bzw. Spülzellenstufe zwischen der dritten und zweiten Kaskadenstufe S₃, S₂ angeordnet. Durch diese Anordnung wird erreicht, dass auf beiden Gasseiten jeweils nur sechs Axialkanäle 68 benötigt werden, wodurch der Brennstoffzellenblock 16 der Brennstoffzellenanordnung 66 in seiner radialen Ausdehnung kompakter ausgeführt werden kann.

Außerdem gewährt diese Anordnung den Vorteil, dass beide ersten Kaskadenstufen S₁ über jeweils drei parallel geschaltete (und parallel angeordnete) Axialkanäle 70 gleichzeitig mit dem jeweiligen Betriebsgas versorgt werden können. Hierdurch kann der Druckverlust in diesen Axialkanälen 70 durch eine relativ geringe Strömungsgeschwindigkeit des Betriebsgases gering gehalten werden. Die in Längsrichtung räumliche Fortsetzung dieser als Gaszufuhrkanäle 72 dienenden Axialkanäle 70 dient als Gaszufuhrkanäle 74 für die weiteren Kaskadenstufen S₂ bis S₄, wobei diese Axialkanäle 68 selbstverständlich zwischen der ersten und vierten Kaskadenstufe S₁, S₄ unterbrochen sind, so dass die Betriebsgasführung analog wie oben beschrieben geführt wird.

Zur Gewährleistung einer zuverlässigen Flutungserkennung der Spülzellen 48, 62 der jeweils vierten Kaskadenstufen S₄ ist die Spülzellenstufe der Sauerstoffseite 4 Brennstoffzellen 8 der ersten Kaskadenstufe S₁ der Wasserstoffseite 6 zugeordnet. Umgekehrt ist die Spülzellenstufe der Wasserstoffseite 6 der zweiten Kaskadenstufe S₂ der Sauerstoffseite 4 zugeordnet. Die Zuordnung der Spülzellen 48 zur ersten Kaskadenstufe S₁ der Wasserstoffseite 6 ist möglich, weil die erste Kaskadenstufe S₁ der Wasserstoffseite 6 mehr Brennstoffzellen 8 umfasst als die erste Kaskadenstufe S₁ der Sauerstoffseite 4. Dies liegt darin begründet, dass mehr Wasser aus den Kathodengasräumen 10 der Sauerstoffseite 4 ausgetragen werden muss als aus den Anodengasräumen 12 der Wasserstoffseite 6 und die Kathodengasräume 10 deshalb stärker mit Betriebsgas durchblasen werden müssen. Hierdurch wird proportional weniger Betriebsgas in der ersten Kaskadenstufe S₁ verbraucht, so dass die nachfolgenden Kaskadenstufen S₂ - S₄ größer, also mit mehr Brennstoffzellen 8, ausgeführt sein müssen.

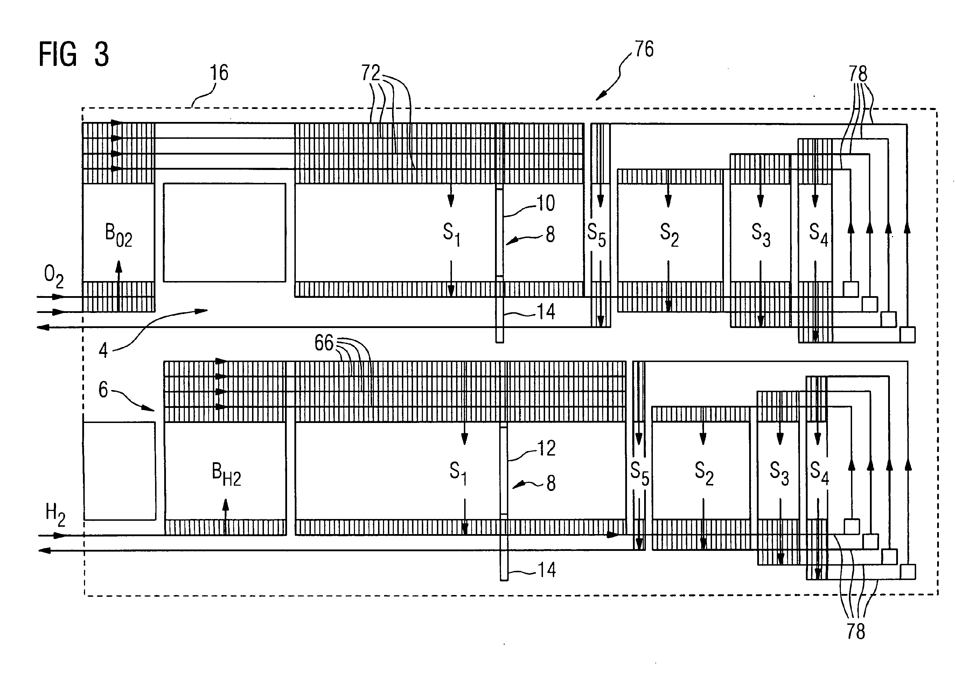

Ein weiteres Ausführungsbeispiel einer Brennstoffzellenanordnung 76 ist in FIG 3 dargestellt, deren Beschreibung sich im Wesentlichen auf die Unterschiede zu den vorhergegangenen Beschreibungen beschränkt. Der Brennstoffzellenblock 16 der Brennstoffzellenanordnung 76 ist auf beiden Gasseiten in jeweils fünf Kaskadenstufen S₁ - S₅ eingeteilt, die jeweils in der Reihenfolge S₁, Sₙ, S₂, ..., Sₙ₋₁ räumlich angeordnet sind, wobei n=5. Hierdurch kann die durchströmte Länge der jeweils 2 x 4 Axialkanäle 78 sehr kurz gehalten und die Strömungen können reibungsarm geführt werden. Die weiteren Vorteile, nämlich dass jeweils die erste Kaskadenstufe S₁ beider Gasseiten räumlich am Anfang aller Kaskadenstufen S₁ - S₅ und insbesondere an den Befeuchtern B_{O2} bzw. B_{H2} angeordnet ist und dass die letzten Kaskadenstufen S₅ bzw. Spülzellenstufen der ersten bzw. zweiten Kaskadenstufe S₁, S₂ zugeordnet sind, bleiben beibehalten. Durch jeweils acht notwendige Axialkanäle 78 pro Gasseite kann die erste Kaskadenstufe S₁ beider Gasseiten durch vier parallel geschaltete Gaszufuhrkanäle 72 bedient werden.

## Patentansprüche

1. Brennstoffzellenanordnung (66, 76) mit einer Anzahl von Brennstoffzellen (8), die zu mehreren, in einem Betriebsgasstrom kaskadiert angeordneten Kaskadenstufen (S_{1,} S_{2,} S_{3,} S_{4,} S_{5,}) zusammengefasst sind,
**dadurch gekennzeichnet, dass** eine Kaskadenstufe (S_{2,} S_{3,} S_{4,} S_{5,}) räumlich zwischen zwei im Betriebsgasstrom vorhergehenden Kaskadenstufen (S_{1,} S_{2,} S_{3,} S₄) angeordnet ist.

2. Brennstoffzellenanordnung (66, 76) nach 1,
**dadurch gekennzeichnet, dass** die Brennstoffzellen (8) in einem durchgehenden Brennstoffzellenblock (16) angeordnet sind.

3. Brennstoffzellenanordnung (66, 76) nach Anspruch 1 oder 2
**dadurch gekennzeichnet, dass** die im Betriebsgasstrom letzte Kaskadenstufe (S_{4,} S_{5,}) räumlich zwischen zwei im Betriebsgasstrom vorhergehenden Kaskadenstufen (S_{1,} S_{2,} S₃) angeordnet ist.

4. Brennstoffzellenanordnung (66, 76) nach Anspruch 3,
**dadurch gekennzeichnet, dass** die letzte Kaskadenstufe (S₄, S₅,) eine Spülzellenstufe ist.

5. Brennstoffzellenanordnung (76) nach einem der vorhergehenden Ansprüche,
**dadurch gekennzeichnet, dass** die Kaskadenstufen (S_{1,} S_{2,} S_{3,} S_{4,} S_{5,}) in der Reihenfolge S₁, Sₙ, S₂, ..., Sₙ₋₁ räumlich angeordnet sind, wobei S₁ die erste und Sₙ die letzte Kaskadenstufe (S_{1,} S_{5,}) ist.

6. Brennstoffzellenanordnung (66, 76) nach einem der vorhergehenden Ansprüche,
**dadurch gekennzeichnet, dass** die Brennstoffzellen (8) für beide Betriebsgase jeweils zu einer Gasseite mit jeweils mehreren kaskadiert angeordneten Kaskadenstufen (S₁, S₂, S₃, S₄, S₅,) zusammengefasst sind.

7. Brennstoffzellenanordnung (66, 76) nach Anspruch 6,
**dadurch gekennzeichnet, dass** eine Spülzellenstufe einer Gasseite in anderen Brennstoffzellen (8) angeordnet ist als die Spülzellenstufe der anderen Gasseite.

8. Brennstoffzellenanordnung (66, 76) nach Anspruch 6 oder 7,
**dadurch gekennzeichnet, dass** eine Spülzellenstufe einer Gasseite in Brennstoffzellen (8) der ersten oder zweiten Kaskadenstufe (S_{1,} S₂) der anderen Gasseite angeordnet ist.

9. Brennstoffzellenanordnung (66, 76) nach einem der Ansprüche 6 bis 8, **dadurch gekennzeichnet, dass** jeweils die erste Kaskadenstufe (S₁) beider Gasseiten räumlich am Anfang aller Kaskadenstufen (S_{1,} S_{2,} S_{3,} S_{4,} S_{5,}) angeordnet ist.

10. Brennstoffzellenanordnung (66, 76) nach einem der Ansprüche 6 bis 9, **dadurch gekennzeichnet, dass** die im Betriebsgasstrom erste Kaskadenstufe (S₁) beider Gasseiten mehrere parallel angeordnete Gaszufuhrkanäle (72) aufweist, deren räumliche Fortsetzung in Längsrichtung als Gaszufuhrkanäle (74) für weitere Kaskadenstufen (S_{2,} S_{3,} S_{4,} S_{5,}) dient.

11. Brennstoffzellenanordnung (76) nach einem der Ansprüche 6 bis 10, **dadurch gekennzeichnet, dass** die Kaskadenstufen (S₁, S₂, S₃, S₄, S₅,) beider Gasseiten in der Reihenfolge S₁, Sₙ, S₂, ..., Sₙ₋₁ räumlich angeordnet sind, wobei S₁ jeweils die erste und Sₙ jeweils die letzte Kaskadenstufe (S₁, S₅,) ist.
